# EUROPÄISCHE PATENTANMELDUNG

(11) **EP 0 896 487 A2**
(43) Veröffentlichungstag der Anmeldung: **10.02.1999**
(21) Anmeldenummer: 98113302.8
(22) Anmeldetag: 16.07.1998
(51) Int. Cl.: H04Q 7/30, H04Q 7/36

(54) **Zellulares Telekommunikationssystem**

(30) Priorität: 05.08.1997 DE 19733857
(71) Anmelder: NOKIA MOBILE PHONES LTD., 02150 Espoo (FI)
(72) Erfinder: Leickel, Torsten, Dr., 44623 Herne (DE); Jakobsen, Jens, 44793 Bochum (DE)
(74) Vertreter: TER MEER STEINMEISTER & PARTNER GbR

(57) **Zusammenfassung**

Die Erfindung betrifft ein zellulares Telekommunikationssystem mit n-Zellen (1, 2), von denen jeweils einer eine Antenne (4, 5) zugeordnet ist, über die eine Basisstation (3) senden und empfangen kann, wobei allen n-Zellen nur eine gemeinsame Basisstation mit n umschaltbaren Antennen zugeordnet und n ≥ 2 ist.

## Beschreibung

Die Erfindung betrifft ein zellulares Telekommunikationssystem gemäß dem Oberbegriff des Patentanspruchs 1.

Bereits bekannte zellulare Telekommunikationssysteme sind im allgemeinen umso kostenintensiver, je größer ihr Sende-/Empfangsbereich ist, d. h. je mehr Zellen im zellularen Telekommunikationssystem vorhanden sind. Dies liegt in erster Linie daran, daß jeder einzelnen Zelle eine eigene Basisstation zugeordnet ist. Je größer also das von einem zellularen Telekommunikationssystem abzudeckende Gebiet sein soll, desto mehr Basisstationen sind notwendig. Folglich stellen die Basisstationen bei heutigen zellularen Telekommunikationssystemen einen der Hauptkostenfaktoren dar.

Aufgabe der Erfindung ist es, ein kostengünstigeres zellulares Telekommunikationssystem zu schaffen, mit dem ein möglichst großer Sende-/Empfangsbereich zur Verfügung gestellt werden kann.

Die Lösung der gestellten Aufgabe ist dem kennzeichnenden Teil des Patentanspruchs 1 zu entnehmen. Vorteilhafte Ausgestaltungen und Weiterbildungen der Erfindung sind in den Unteransprüchen 2 bis 17 angegeben.

Ein zellulares Telekommunikationssystem gemäß der Erfindung zeichnet sich dadurch aus, daß allen n-Zellen nur eine gemeinsame Basisstation mit n-umschaltbaren Antennen zugeordnet ist, wobei die Anzahl n der Zellen größer oder gleich zwei ist.

Nach einem bevorzugten Ausführungsbeispiel der Erfindung weist das Telekommunikationssystem genau zwei Zellen auf, wobei die Zuordnung der Zellen zu der gemeinsamen Basisstation über einen in der Basisstation enthaltenen Schalter erfolgt, über den die jeweiligen Antennen mit einer in der Basisstation enthaltenen RF (Funkfrequenz)-Einheit verbunden werden. Auf diese Weise kann im Vergleich zu herkömmlichen Telekommunikationssystemen eine Basisstation eingespart werden, was sich positiv auf die Kosten auswirkt.

Durch entsprechende Wahl der Anzahl der Antennen und des Schalters können alternativ auch mehr als zwei Zellen jeweils einer Basisstation zugeordnet werden.

Nach einer Weiterbildung der Erfindung wird der Schalter von einer in der Basisstation enthaltenen Mikrosteuereinheit (MCU) gesteuert. Die Schaltersteuerung kann dabei gemäß einem Algorithmus erfolgen, der zum Beispiel als Software in der MCU realisiert ist. Auf diese Weise kann die Steuerung des Schalters relativ einfach und schnell an unterschiedliche Ansprüche angepaßt werden.

Nach einer anderen Weiterbildung der Erfindung wird von der MCU gelieferte Information darüber, in welchem Zeitschlitz und mit welcher Frequenz die RF-Einheit Daten zu übertragen hat, in einem BMC (Burst Mode Controller) zwischengespeichert, bevor sie an die RF-Einheit weitergeleitetwird. Ein Zwischenspeichern der Daten ist deshalb erforderlich, da entsprechend der Schalterstellung die Daten nur in entsprechenden Zeitschlitzen an die RF-Einheit weitergegeben werden dürfen.

Damit die MCU die o. g. Funktionen ausführen kann, ist diese nach einer Weiterbildung der Erfindung mit Speicherbausteinen gekoppelt, die zum Beispiel als feste und/oder variable ROM's (Read Only Memory) und/oder RAM's (Read Access Memory) ausgebildet sein können, wobei die in der Basisstation enthaltenen Bestandteile über einen gemeinsamen Taktgeber synchronisiert sind. Auf diese Weise ist sichergestellt, daß die richtigen Daten in den entsprechenden Zeitschlitzen über die richtige Antenne gesendet werden.

Nach einer noch weiteren Ausgestaltung der Erfindung sind eine erste Antenne in einem Gebäude und eine zweite Antenne außerhalb des Gebäudes angeordnet. Somit kann auf einfache Weise der Sende-/Empfangsbereich des Telekommunikationssystems erweitert werde. Folglich kann zum Beispiel auch eine Verbindung zwischen zwei Mobilstationen aufgebaut werden, von denen sich die eine im Inneren des Gebäudes und die andere zum Beispiel im Garten befindet.

Telekommunikationssysteme der oben beschriebenen Art können z. B. nach dem DECT-Standard betrieben werden. Es kann sich hier um zellulare oder sogenannte schnurlose Systeme handeln.

Nach dem DECT-Standard ist neben der Sprachübertragung auch die Übertragung von Datensignalen möglich. Folglich können auf dem DECT-Standard basierende zellulare Datennetze aufgebaut werden, die es dem Teilnehmer erlauben, sich frei innerhalb verschiedener Zellen zu bewegen, ohne daß eine Unterbrechung des z. B. gerade geführten Gesprächs erfolgt. Die Sprachübertragung und die Übertragung der Datensignale erfolgt dabei über sogenannte Bearer (siehe DECT-Standard für nähere Ausführungen).

Um eine Gesprächsunterbrechung zu verhindern, wird ein Gespräch bei Bedarf von einer Zelle in eine andere übergeben, was üblicherweise auch als Handover (Wechsel auf einen anderen Kanal), speziell als Intercell-Handover bezeichnet wird.

Ein Handover kann ferner innerhalb einer Zelle (Intracell-Handover) durchgeführt werden, wenn sich die Verbindungsqualität zum Beispiel durch Gleichkanalstörungen verschlechtert. Dabei erfolgt ein Wechsel des Funkkanals innerhalb einer Zelle unter Beibehaltung der gleichen Basisstation. Der Kanalwechsel kann dabei in einem Wechsel der Frequenz oder des Zeitschlitzes bestehen.

Bei den o. g. Handover-Arten erfolgt ein Kanalwechsel nahtlos, also ohne Unterbrechung der Verbindung. Dies wird dadurch erreicht, daß der alte Träger (Bearer) erst aufgelöst wird, wenn der neue bereits eingerichtet ist. Folglich müssen kurzfristig zwei Bearer parallel betrieben werden, was zu einer erhöhten Systembelastung führt. Um die Ressourcen des Telekommunikationssystems jedoch zu schonen, muß die Anzahl der Handover einerseits möglichst gering gehalten werden, wobei andererseits eine beliebige Reduktion der Handover-Anzahl nicht möglich ist, da sonst die gewünschte Verbindungsqualität nicht beibehalten werden kann.

Um zum Beispiel bei einem Zweizellen-Telekommunikationssystem gemäß dem DECT-Standard die Leistung des Systems voll nutzen zu können, müssen in jeder Zelle über jeweilige Antennen sogenannte Dummy-Bearer (DB) gesendet werden.

Damit die Mobilstationen wissen, daß ein Anruf für sie gekommen ist, müssen sie in einem bestimmten Zeitschlitz und bei einer bestimmten Frequenz ihren Empfänger aktivieren, um festzustellen, ob Information für sie vorliegt. Diese Information bekommen sie üblicherweise über den Broadcast-Kanal, der in der Regel über den Dummy Bearer (DB) verschickt wird.

Um Störungen der Dummy Bearer zu vermeiden, müssen diese auf verschiedenen Kanälen gesendet werden, d. h. bei einer unterschiedlichen Frequenz und/oder bei einem anderen Zeitschlitz.

Wird in einer Basisstationen aus Kostengründen ein sogenannter "Low-Cost"-Synthesizer verwendet, so ist es mit einem derartigen Synthesizer nicht möglich, in zwei aufeinanderfolgenden Zeitschlitzen die Frequenz zu wechseln, da der Synthesizer zu langsam ist. Dies bedeutet, daß statt der im DECT-Standard definierten 24 Zeitschlitze lediglich nur jeder zweite verwendet werden kann. Folglich können bei der Verwendung eines "Low-Cost"Synthesizers jeweils nur sechs Zeitschlitze im Downlink (Basisstation-Mobilstation) und im Uplink (Mobilstation-Basisstation) verwendet werden.

Möchte man nun die Anzahl der Basisstationen bei dem o. g. Beispiel von zwei auf eins reduzieren und über die verbleibende Basisstation, in der ein langsamer Synthesizer verwendet wird, die jeweiligen Bearer in beide Zellen senden, so verbleiben folglich für den Aufbau der Bearer (Traffic Bearer und Dummy Bearer) lediglich sechs Zeitschlitze für Verbindungen von der Basisstation zur Mobilstation und von der Mobilstation zur Basisstation. Bei einer Standardkonfiguration eines Telekommunikationssystems sollte es möglich sein, mit mindestens einer Mobilstation aus einer Zelle nach draußen (line call) telefonieren zu können, wobei gleichzeitig mit einer anderen Mobilstation in der Zelle eine Verbindung mit einer Mobilstation einer anderen Zelle (inter call) aufgebaut werden kann. Ferner muß zusätzlich in jeder Zelle ein Handover möglich sein, wobei weitere Mobilstationen in Bereitschaft sein können. Dadurch ergibt sich für ein Telekommunikationssystem gemäß dem DECT-Standard mit zwei Zellen und "Low-Cost"-Synthesizers folgende Bearerzahl:

| | | |
|---|---|---|
| **1.** | Senden eines Dummy Bearers in der ersten Zelle | 1 Bearer; |
| **2.** | Senden eines Dummy Bearer in der zweiten Zelle | 1 Bearer; |
| **3.** | Gespräch zwischen zwei Nebenstellenapparaten | 2 Bearer; |
| **4.** | Gespräch über eine Amtsleitung nach draußen | 1 Bearer; |
| **5.** | Handover-Bearer für jede Zelle | 2 Bearer |
| **6.** | Insgesamt | 7 Bearer |

Dies bedeutet, daß es nicht möglich ist, ein Zweizellen-Telekommunikationssystem gemäß dem DECT-Standard mit nur einer Basisstation zu realisieren, wenn in der Basisstation ein "Low-Cost"-Synthesizer verwendet wird.

Man könnte natürlich daran denken, in diesem Fall einen schnelleren Synthesizer zu verwenden, bei dem sich im Uplink und im Downlink jeweils zwölf Kanäle ausnutzen lassen. Ein derartiger Synthesizer ist aber ausgesprochen teuer.

Betrachtet man andererseits ein Telekommunikationssystem mit mehr als zwei Zellen, so ergeben sich auch bei Verwendung eines schnellen Synthesizers die o. g. Probleme hinsichtlich der Kanalkapazität.

In Weiterbildung der Erfindung enthält daher ein auf einem ersten Kanal gesendeter Bearer Information über die Position eines zweiten Kanals, damit sich die Mobilstationen der jeweiligen Zelle unter Verwendung dieser Information auf den zweiten Kanal einstellen können. Position bedeutet in diesem Zusammenhang Information bezüglich der Frequenz und des Zeitschlitzes. Auf diese Weise kann zum Beispiel ein "Seamless Handover" realisiert werden, bei dem bei einem Handover (Intercell oder Intracell) keine Unterbrechung des Gesprächs erfolgt.

Nach einer noch weiteren Ausgestaltung wird die Positionsinformation auf dem ersten Kanal parallel zu einem auf dem zweiten Kanal aufgebauten Traffic Bearer (TB) gesendet. Den Mobilstationen des zellularen Telekommunikationssystems wird dadurch gezielt mitgeteilt, auf welchen Zeitschlitz und welche Frequenz sie sich einstellen müssen, um Broadcast-Information zu erhalten. Die Broadcast-Information enthält Information darüber, wann die Mobilstationen ihren jeweiligen Empfänger (bei welcher Frequenz und in welchem Zeitschlitz) aktivieren müssen. Dadurch müssen die Mobilstationen nicht sämtliche Kanäle einzeln nach Broadcast-Information durchsuchen, wodurch der Stromverbrauch der Mobilstationen erheblich verringert wird.

Nach einer anderen Weiterbildung der Erfindung wird die Positionsinformation über einen Dummy Bearer gesendet, der nach Ablauf einer vorbestimmten Zeit abgeschaltet wird. Dadurch wird der vom Dummy Bearer belegte Kanal freigegeben und kann anderweitig, zum Beispiel für den Aufbau eines weiteren Traffic Bearers, verwendet werden.

Nach einer bevorzugten Ausführungsform wird der Dummy Bearer nach 640 Millisekunden abgeschaltet. Während dieser Zeit werden alle auf den Dummy Bearer eingestellten Mobilstationen über einen Kanalwechsel informiert. Falls keine Veränderung des Broadcast Kanals erwartet wird, aktivieren die Mobilstationen alle 640 Millisekunden ihren Empfänger, was der Länge von vier Multiframes entspricht, die jeweils 160 Millisekunden lang sind. Da die Basisstation jeweils in jedem Multiframe den Broadcast-Kanal aussendet, ist sichergestellt, daß alle Mobilstationen über den neuen Kanal informiert werden, bevor der Dummy Bearer abgeschaltet wird.

Alternativ kann der Dummy Bearer (DB) auch erst nach einer beliebig anderen geeigneten Zeit abgeschaltet werden. So kann der Dummy Bearer zum Beispiel so lange aufrechterhalten bleiben, bis der von ihm belegte physikalische Kanal anderweitig benötigt wird, zum Beispiel für den Aufbau eines weiteren Traffic Bearers. Auf diese Weise werden alle zur Verfügung stehenden Kanäle eines DECT-Telefonsystems optimal genutzt.

Nach einer weiteren Ausführungsform des Telekommunikationssystems gemäß der Erfindung wird auf dem ersten Kanal nur der Dummy Bearer gesendet. Folglich wird die an die Mobilstationen übertragene Broadcast-Information über einen permanenten Dummy Bearer übertragen, so lange kein Traffic Bearer (TB) aufgebaut ist. Nach dem Aufbau mindestens eines ersten Traffic Bearers (TB) erhalten alle auf dem Dummy Bearer (DB) synchronisierten Mobilstationen über diesen Broadcast-Information bezüglich des Kanalwechsels. Auf diese Weise kann den Mobilstationen gezielt mit geteilt werden, auf welchen Zeitschlitz und welche Frequenz sie sich einstellen müssen, um zum Beispiel weitere Broadcast-Information zu erhalten.

Diese Broadcast-Information kann zum Beispiel in dem neu aufgebauten Traffic Bearer enthalten sein, aufden sich nun alle Mobilstationen einstellen, auch wenn sie im Moment selbst keinen Traffic Bearer benötigen. Dadurch wird sofort nach dem Aufbau einer ersten Verbindung einer Mobilstation der von dem Dummy Bearer belegte Kanal freigegeben.

Nach einer anderen Ausführungsform des Telekommunikationssystems gemäß der Erfindung wird auf dem ersten Kanal ein Traffic Bearer (TB) gesendet, der nach Aufbau des Traffic Bearers auf dem zweiten Kanal in den Dummy Bearer überführt wird. Die Umwandlung eines Traffic Bearers in einen Dummy Bearer kann zum Beispiel dadurch erreicht werden, daß lediglich die Sprachübertragung gestoppt wird (abkoppeln der U-Plane). Das Stoppen der Sprachübermittlung ist deshalb zu empfehlen, da sonst die anderen auf den Traffic Bearer eingestellten Mobilstationen evtl. gestört werden können.

Nach einer noch anderen Ausführungsform des Telekommunikationssystems gemäß der Erfindung wird mit dem Abschalten des letzten Traffic Bearers (TB) dieser in einen permanenten Dummy Bearer (DB) umgewandelt, so daß lediglich die Sprachübermittlung auf diesen Kanal gestoppt werden muß. Auch in diesem Fall ist ein Scannen der Kanäle nach dem Broadcast-Kanal durch die Mobilstationen nicht erforderlich.

Es können ferner Kanäle von Zellen jeweils anderen Zellen zugeordnet werden. Dadurch ist es möglich, vorübergehende Kanalengpässe einer Zelle durch nicht verwendete Kanäle einer anderen Zelle zu vermeiden, indem nicht verwendete Kanäle in der anderen Zelle geborgt werden.

Im folgenden wird ein Ausführungsbeispiel der Erfindung unter Bezugnahme auf die beigefügten Zeichnungen näher beschrieben. Es zeigen:
**Figur 1** ein zellulares DECT-Telekommunikationssystem gemäß der Erfindung mit zwei Zellen,
**Figur 2** ein Blockdiagramm einer Basisstation für das zellulare Telekommunikationssystem nach Figur 1.
**Figur 3** das zellulare Telekommunikationssystem nach Figur 1 mit verschiedenen Verbindungsmöglichkeiten der Mobilstationen,
**Figur 4a und 4b** die von einem langsamen Synthesizer in einer Basisstation eines zellularen Telekommunikationssystems nach Figur 1 verwendbaren Zeitschlitze,
**Figur 5** eine Kanalumschaltung in dem zellularen Telekommunikationssystem nach Figur 1,
**Figur 6** ein Ablaufdiagramm für die Kanalumschaltung nach Figur 5,
**Figur 7a** die verwendeten Zeitschlitze des Telekommunikationssystems nach Figur 1 ohne aktives Gespräch,
**Figur 7b** die verwendeten Zeitschlitze des Telekommunikationssystems nach Figur 1 mit einem aktiven Gespräch über Antenne 1,
**Figur 7c** die verwendeten Zeitschlitze des Telekommunikationssystems nach Figur 1 mit zwei aktiven Gesprächen in zwei Zellen,
**Figur 7d** die verwendeten Zeitschlitze des Telekommunikationssystems nach Figur 1 mit zwei aktiven Gesprächen in einer Zelle, und
**Figur 7e** die verwendeten Zeitschlitze des Telekommunikationssystems nach Figur 1 mit drei aktiven Gesprächen in zwei Zellen.

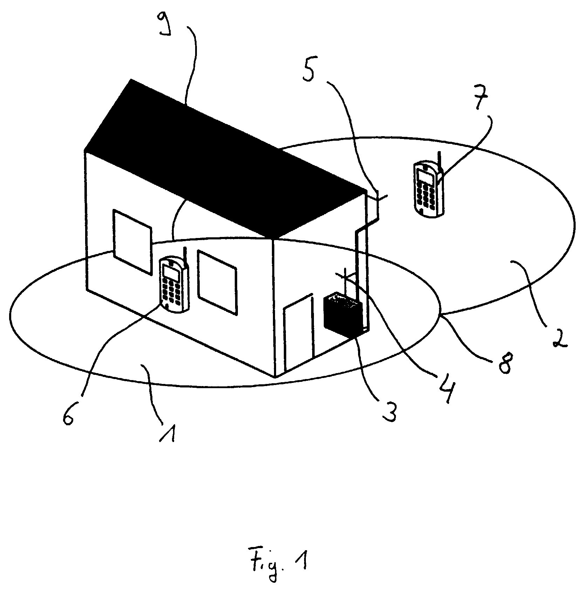

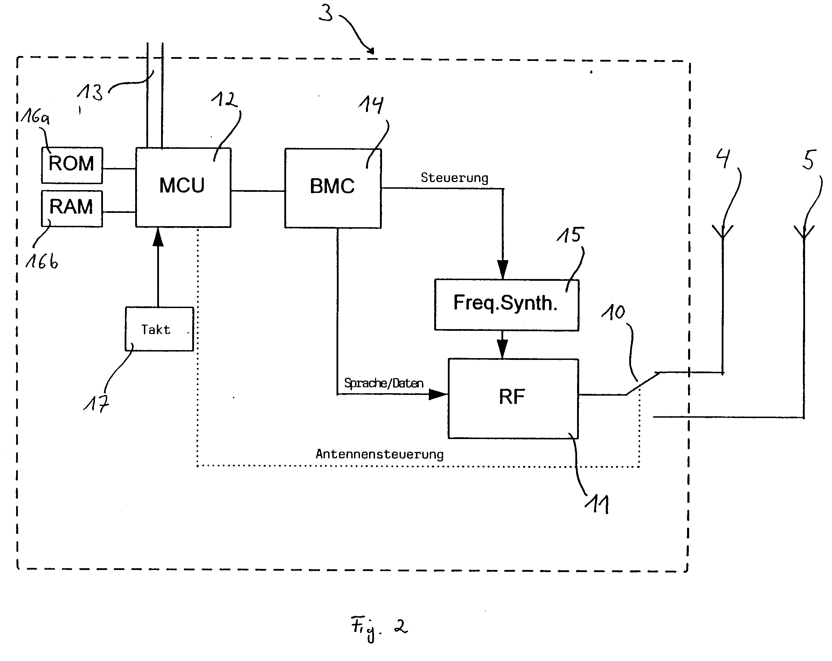

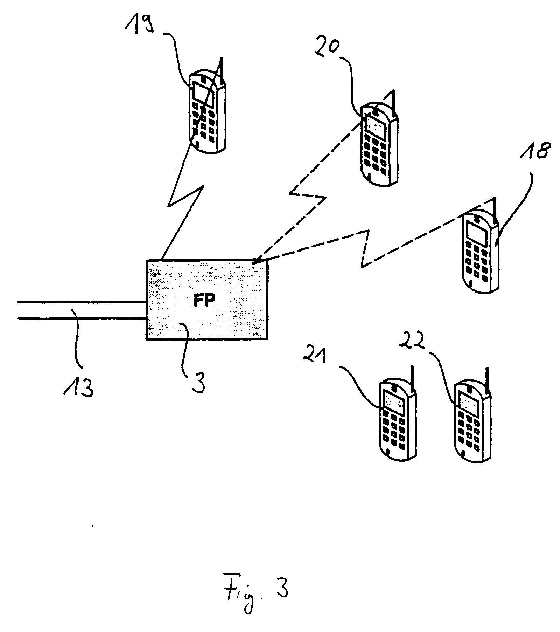

Die Figur 1 zeigt ein zellulares DECT-Telekommunikationssystem gemäß einem Ausführungsbeispiel der Erfindung mit einer ersten Zelle 1 und einer zweiten Zelle 2. In der Zelle 1 ist eine Basisstation 3 angeordnet, die wahlweise über jeweilige Antennen 4, 5 den Zellen 1 und 2 zugeordnet wird.

Eine in der ersten Zelle 1 befindliche Mobilstation 6 kommuniziert folglich über die Antenne 4 mit der Basisstation 3, während eine in der zweiten Zelle 2 befindliche Mobilstation 7 über die Antenne 5 der Basisstation 3 zugeordnet ist.

Wie in Figur 1 gezeigt, überschneiden sich die Zellen 1 und 2 in einem Bereich 8, der wahlweise der Antenne 4 oder der Antenne 5 zuordbar ist.

Die Basisstation 3 und die Antenne 4 sind in einem Gebäude 9 untergebracht. Auf diese Weise wird der Innenbereich des Gebäudes 9 sende-/emfpangsseitig über die Antenne 1 abgedeckt, während über die Antenne 5 die Zelle 2 versorgt wird, die sich außerhalb des Gebäudes 9 (z. B. im Garten) befindet.

Durch dieses Zweizellen-Telekommunikationssystem können Verbindungen zwischen den in Zelle 1 und Zelle 2 befindlichen Mobilstationen 6, 7 aufgebaut werden. Es kann also z. B. vom Haus in den Garten telefoniert werden, wobei den Zellen 1 und 2 nur einer gemeinsamen Basisstation 3 zugeordnet werden, die im folgenden näher beschrieben wird.

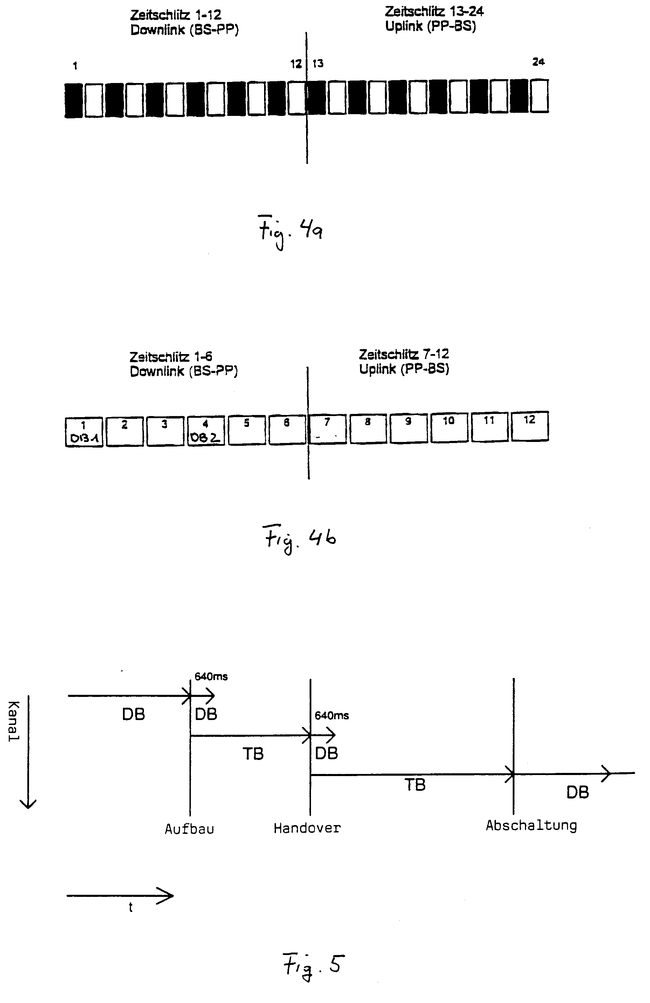

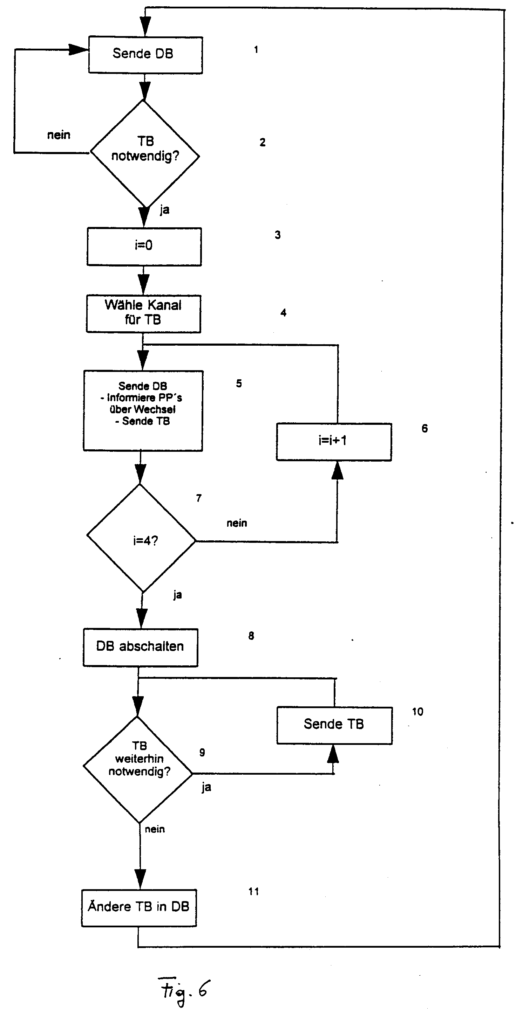

Figur 2 zeigt ein Blockdiagramm der Basisstation nach Figur 1.

Die Basisstation 3 enthält einen Schalter 10, über den die Antennen 4, 5 wahlweise mit einer ebenfalls in der Basisstation 3 enthaltenen RF-Einheit 11 verbunden werden.

Der Schalter 10 wird von einer Mikrosteuereinheit (MCU) 12 gesteuert, in der unter anderem die MAC (Medium Access Control)-Schicht gemäß dem DECT-Standard enthalten ist. Die MAC-Schicht übernimmt Kontrollfunktionen für die Organisation der Kanäle und ist in der Regel in der MCU 12 in Software realisiert, könnte jedoch auch ebensogut in Hardware abgebildet sein.

Ferner werden über die MCU 12 die Daten bzw. Sprachdaten von einer oder mehreren Amtsleitungen 13 von einem digitalen Netz (ISDN) oder einem analogen Netz (PSTN) an die RF-Einheit 11 weitergeleitet.

Die RF-Einheit 11 enthält die Hochfrequenzkomponenten (Sender und Empfänger) der Basisstation 3. Hier wird die Modulation und Demodulation der Daten vorgenommen, wobei abhängig von der Entscheidung der MCU 12, über welche Antenne zu senden/empfangen ist, die RF-Einheit mit dieser Antenne verbunden wird.

Damit die RF-Einheit 11 weiß, in welchem Zeitschlitz und mit welcher Frequenz die Daten zu übertragen sind, werden die Bursts mit der Information über den zu verwenden Zeitschlitz und die Frequenz an eine BMC (Burst Mode Controller)-Einheit 14 von der MCU 12 weitergeleitet. Der BMC 14 enthält Register (nicht gezeigt), in denen die Daten zwischengespeichert werden. Die Daten werden dann im entsprechenden Zeitschlitz an die RF-Einheit 11 weitergegeben. Parallel dazu teilt der BMC 14 der RF-Einheit 11 mit, welche Sendefrequenz für die Übertragung dieser Daten einzustellen ist. Zwischen der BMC 14 und der RF-Einheit 11 ist ein sogenannter "Low-Cost"-Synthesizer 15 angeordnet.

Das gesamte Verfahren läuft in der anderen Richtung ähnlich ab Wenn die RF-Einheit 11 Daten empfangen und demoduliert hat, werden diese dann über den BMC 14 an die MCU 12 und von dort weiter an die Amtsleitung 13 geleitet.

Für interne Gespräche empfängt die MCU 12 entsprechend die Daten über die RF-Einheit 11 und den BMC 14 und schickt sie kurz darauf in einem anderen Zeitschlitz über die BMC 14 und die RF-Einheit 11 wieder ab.

Damit die MCU ihre Funktionen ausführen kann, hat sie Zugriff auf Speicher 16, die zum Beispiel als ROM (Read Only Memory) 16a oder als RAM (Read Access Memory) 16b ausgebildet sein können.

Die Figur 2 zeigt ferner einen Taktgeber 17, der den Arbeitstakt für die MCU 12 und evtl. andere Komponenten vorgibt.

In dem Anwendungsbeispiel nach Figur 1 befindet sich die Antenne 4 beispielsweise in der Wohnung, während die Antenne 5 außerhalb des Gebäudes angeordnet ist. Aus der Darstellung in dem Blockschaltbild nach Figur 2 ergibt sich, daß zum Beispiel über die Basisstation 3 die Verbindungen von zwei ISDN-Amtsleitungen 13 zu zwei Mobilstationen, von denen eine mit dem Antennensystem 4 verbunden ist und eine zweite mit dem Antennensystem 5, hergestellt werden können, ohne eine zweite RF-Einheit 11 einzusetzen.

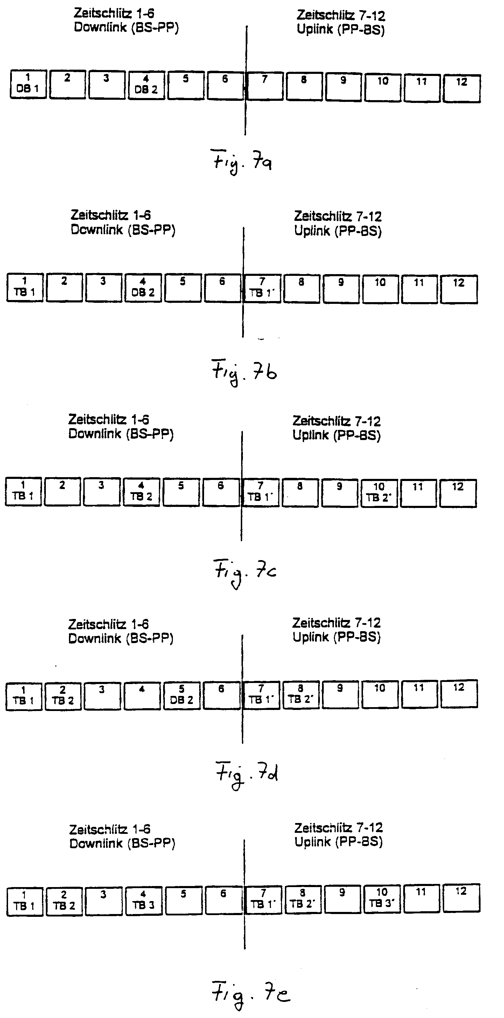

Die Figur 3 zeigt das Ausführungsbeispiel des zellularen Telekommunikationssystems nach Figur 1 mit verschiedenen Verbindungsmöglichkeiten der Mobilstationen.

Darin befindet sich zum Beispiel eine Mobilstation 18 in der Zelle 2, also außerhalb des Gebäudes 3, wobei sich die anderen Mobilstationen 19, 20, 21, 22 zum Beispiel innerhalb des Gebäudes 3, also in der Zelle 1 befinden.

Wie in Figur 3 gezeigt, sind die Mobilstationen 18, 19, 20 mit der Basisstation 3 verbunden. Die Basisstation 3 verbindet die Mobilstation 19 mit einer Amtsleitung 13 (Linecall) wobei gleichzeitig die Mobilstation 20 mit der in der anderen Zelle befindlichen Mobilstation 18 (Intercomcall) verbunden ist. Die Mobilstationen 21, 22 sind sende- und empfangsbereit und empfangen zum Beispiel über einen in die Zelle 1 ausgesendeten Dummy Bearer Broadcast-Information.

Bei dem in Figur 3 dargestellten Szenario muß die Basisstation 3 jeweils einen Dummy Bearer in jede Zelle senden. Ferner muß die Mobilstation 3 für die Verbindung zwischen der Mobilstation 19 und der Amtsleitung 13 einen Bearer zur Verfügung stellen sowie zwei Bearer für die Verbindung zwischen den Mobilstationen 20 und 18. Da es möglich ist, daß sich die Mobilstationen von einer Zelle in eine andere bewegen, müssen für einen Handover in jeder Zelle insgesamt zwei Bearer zur Verfügung gestellt werden. Dies bedeutet, daß maximal sieben Bearer gleichzeitig von der Basisstation 3 erzeugt werden müssen.

Die Figur 4a zeigt die von dem "Low-Cost"-Synthesizer 15 der Basisstation 3 des Ausführungsbeispiels nach Figur 1 verwendbaren Zeitschlitze.

Da ein "Low-Cost"-Synthesizer sehr langsam ist, ist es nicht möglich, auf zwei aufeinanderfolgenden Zeitschlitzen die Frequenz zu wechseln. Dies hat zur Folge, daß von den im DECT-Standard definierten zwölf Zeitschlitzen für Downlink (Basisstation-) und Uplink (Mobilstation-Basisstation) jeweils nur sechs Zeitschlitze verwendet werden können, die in Figur 4a schwarz dargestellt sind.

Folglich können mit der Basisstation des Ausführungsbeispiels nach Figur 1 nur maximal sechs Bearer aufgebaut werden.

Die Figur 4b zeigt die Zeitschlitze nach Figur 4a, wobei die vom Synthesizer nicht verwendbaren Zeitschlitze weggelassen sind.

Wie in der Figur 4b gezeigt, sind im Zeitschlitz 1 ein erster Dummy Bearer DB 1 und im Zeitschlitz 4 ein zweiter Dummy Bearer DB2 aufgebaut. Übertragen auf das zellulare Telekommunikationssystem mit zwei Zellen gemäß der Erfindung bedeutet dies, daß weder in der Zelle 1 noch in der Zelle 2 ein Gespräch aktiv ist. Die im Downlink und Uplink zur Verfügung stehenden Zeitschlitze müssen entsprechend der Zellenanzahl aufgeteilt werden. Dies bedeutet, daß in Figur 4b die Zeitschlitze 1, 2 und 3 der Zelle 1 und die Zeitschlitze 4, 5 und 6 der Zelle 2 zugewiesen sind. Entsprechendes gilt auch für den Uplink, also für die Zellen 7 bis 12. Folglich wird der Dummy Bearer DB1 im Zeitschlitz 1 über die Antenne 1 in die Zelle 1 gesendet, während der Dummy Bearer DB2 im Zeitschlitz 4 über die Antenne 2 in die Zelle 2 gesendet wird.

Da für den Aufbau von maximal sieben Bearern lediglich sechs Zeitschlitze zur Verfügung stehen, muß bei dem zellularen Telekommunikationssystem gemäß der Erfindung eine spezielle Kanalumschaltung erfolgen.

Die Figur 5 zeigt die Kanalumschaltung in dem zellularen Telekommunikationssystem nach Figur 1.

Zur Erläuterung wird in Figur 5 lediglich ein Traffic Bearer TB aufgebaut, der nach einem Traffic Bearer-Handover wieder abgeschaltet wird.

Falls keine Verbindung zwischen der Basisstation und den Mobilstationen besteht, sind alle im Idle Locked (siehe DECT-Standard) befindlichen Mobilstation auf einen von der Basisstation gesendeten Dummy Bearer DB synchronisiert. Dieser verschickt in der Regel Broadcast-Information zu den Mobilstationen. Die Broadcast-Information enthält zum einen Information darüber, wann die Mobilstationen ihren Empfänger jeweils aktivieren müssen (in welchem Zeitschlitz und bei welcher Frequenz), um festzustellen, ob zum Beispiel ein Anruf für sie vorliegt. Zum anderen wird den Mobilstationen über den Broadcast-Kanal mitgeteilt, in welchem Zeitschlitz und bei welcher Frequenz die nächste Broadcast Message übermittelt wird.

Wie Figur 5 zeigt, wird nach dem Aufbau eines ersten Traffic Bearer TB der Dummy Bearer DB nicht sofort abgeschaltet, sondern weitere 640 Millisekunden parallel zum Traffic Bearer TB aufrechterhalten. Während dieser Zeit können von der Basisstation über den Dummy Bearer DB vier Multiframes mit einer Länge von je 160 Millisekunden an alle auf den Dummy Bearer DB synchronisierten Mobilstationen gesendet werden, um diese über den Kanalwechsel zu informieren. Da die Basisstation jeweils in jedem Multiframe die Broadcast-Information aussendet, wobei die Mobilstationen alle 640 Millisekunden ihren Empfänger aktivieren, wenn keine Veränderung des Broadcast-Kanals erwartet wird, kann auf diese Weise sichergestellt werden, daß alle auf den Dummy Bearer DB synchronisierten Mobilstationen über den Kanalwechsel informiert werden.

Nach 640 Millisekunden wird der Dummy Bearer DB abgeschaltet, um so nicht mehr notwendige Kanäle sofort freizugeben. Der Dummy Bearer DB ist jetzt deshalb nicht mehr notwendig, weil alle ehemals auf den Dummy Bearer DB synchronisierten Mobilstationen nun auf den Traffic Bearer TB synchronisiert sind, in dem auch die Broadcast-Information enthalten ist.

Die Figur 5 zeigt ferner einen Handover eines Traffic Bearers TB. Hierbei wird mit dem Aufbau eines neuen Traffic Bearers TB der alte Traffic Bearer TB in einen Dummy Bearer DB umgewandelt, über den alle auf den alten Traffic Bearer synchronisierten Mobilstationen über den Handover informiert werden.

Die Umwandlung des Traffic Bearers TB in einen Dummy Bearer DB erfolgt dabei durch das Abschalten der Sprachübertragung, wobei gemäß dem DECT-Schichtenmodell lediglich die U-Plane abgetrennt werden muß. Um sicherzustellen, daß auch alle Mobilstationen über den Kanalwechsel (Handover) informiert werden, wird auch in diesem Fall der Dummy Bearer DB erst nach 640 Millisekunden abgeschaltet.

Die Figur 5 zeigt auch das Abschalten eines letzten Traffic Bearer TB. Hierzu wird dieser in einen Dummy Bearer DB umgewandelt, also wie bereits erwähnt, lediglich die Sprachdatenübermittlung gestoppt, wobei der Kanal des letzten Traffic Bearers beibehalten werden kann. Nach der Umwandlung des Traffic Bearers TB in den Dummy Bearer DB sind nun alle sich im Idle Locked Zustand befindlichen Mobilstationen auf den Dummy Bearer DB synchronisiert und erhalten wieder über diesen die Broadcast-Information.

Dadurch, daß mit dem Aufbau eines ersten Traffic Bearers TB ein zuvor gesendeter Dummy Bearer DB abgeschaltet wird (nach 640 Millisekunden), kann der vom Dummy Bearer DB belegte Kanal anderweitig verwendet werden. Auf diese Weise reduziert sich die maximale Anzahl von notwendigen Bearern für das Beispiel nach Figur 3 von sieben Bearern auf fünf Bearer. Dadurch ist es möglich, auch mit einem billigen, langsamen Synthesizer in einer Basisstation eines Telekommunikationssystems das in Figur 3 beschriebene Szenario zu realisieren.

Die Figur 6 zeigt das Ablaufdiagramm zur Kanalumschaltung in einem zellularen Telekommunikationssystem gemäß der Erfindung nach Figur 5. Darin werden folgende Schritte von der Basisstation durchgeführt.

Schritt 1: Über den DB wird Broadcast-/Paging-/Systeminformation an alle synchronisierten Mobilstationen gesendet, wobei keine Traffic Bearer TB aktiv sind.

Schritt 2: Falls von einer Mobilstation oder auch einer Basisstation kein Traffic Bearer angefordert wird, erfolgt ein Rücksprung zu Schritt 1, so daß der Dummy Bearer DB weiter gesendet wird. Liegt dagegen eine Traffic Bearer TB Anfrage vor, wird das Flußdiagramm bei Schritt 3 fortgesetzt.

Die Schritte 3 bis 8 beschreiben die Prozedur, wie der Dummy Bearer DB abzuschalten ist.

Schritt 3: Ein Zähler i wird auf 0 gesetzt.

Schritt 4: Es erfolgt die Wahl eines geeigneten Kanals, auf den der Traffic Bearer TB von der Basisstation gesendet wird und der die Broadcast-/Paging-/Systeminformation für die Mobilstationen enthalten wird.

Schritt 5: Der Dummy Bearer DB aus Schritt 1 wird weiterhin gesendet, wobei er Information enthält, auf welchen Kanal die Mobilstationen sich zu schalten haben, um weiterhin Broadcast-/Paging-/Systeminformation zu erhalten. Gleichzeitig erfolgt ab diesem Zeitpunkt das Aussenden des neuen Traffic Bearers TB.

Schritt 6: Falls der Zähler i den Wert 4 aufweist, wird zu Schritt 8 verzweigt. Ist der Wert i = 4 noch nicht erreicht, wird das Flußdiagramm bei Schritt 7 fortgesetzt.

Schritt 7: Rücksprung zu Schritt 5, nachdem der Zähler i um 1 erhöht wurde.

Diese Zählerschleife wird alle 160 Millisekunden durchlaufen, was der Zeit für einen Multiframe entspricht. Wird die Schleife also viermal durchlaufen, so ist sichergestellt, daß alle Mobilstationen mindestens einmal über den Kanalwechsel informiert wurden. Nach Erhalt der Nachricht schalten die Mobilstationen auf den Traffic Bearer TB um, da die Mobilstationen mindestens einmal während eines Frames, der 640 Millisekunden lang ist, die Signale von der Basisstation abgehört haben.

Schritt 8: Der Dummy Bearer DB wird nun abgeschaltet, da der Traffic Bearer die notwendige Broadcast-Information auch an die Mobilstationen aussendet, die zur Zeit keinen Traffic Bearer TB benötigen.

Schritt 9: Falls weiterhin ein Traffic Bearer benötigt wird, wenn also zum Beispiel ein "Linecall" oder "Intercomcall" durchgeführt wird, dann wird zu Schritt 10 verzweigt. Falls kein Traffic Bearer benötigt wird, wird das Flußdiagramm bei Schritt 11 fortgesetzt.

Schritt 10: Weiteres Aussenden des Traffic Bearers mit der Broadcast-/Paging-/Systeminformation und Verzweigung zu Schritt 9.

Schritt 11: Da kein Traffic Bearer TB mehr benötigt wird, kann der Traffic Bearer TB wieder in einen Dummy Bearer DB umgewandelt werden, wobei das Flußdiagramm wieder bei Schritt 1 beginnt.

Die Figuren 7a bis 7e zeigen für verschiedene Fälle die von der Basisstation eines erfindungsgemäßen zellularen Telekommunikationssystems nach Figur 1 verwendeten Zeitschlitze, in denen die jeweiligen Bearer über entsprechende Antennen 4, 5 gesendet werden.

Üblicherweise wird während der Systeminitialisierung jeder Zelle eine vorbestimmte Anzahl von Zeitschlitzen (Kanäle) zugewiesen. Bei der folgenden Betrachtung kommt es nicht darauf an, welcher Zeitschlitz welcher Zelle zugewiesen wird, da lediglich die Anzahl der zugewiesenen Zellen von Bedeutung ist.

Bei den Figuren 7a bis 7c und 7e sind jeweils die Zeitschlitze 1 bis 3 (7 bis 9) der Zelle 1 und die Zeitschlitze 4 bis 6 (10 bis 12) der Zelle 2 zugeordnet. Anhand der folgenden Beispiele soll die Kanalzuweisung bzw. das Umschalten zwischen den Antennen 4 und 5 verdeutlicht werden.

Die Figur 7a zeigt einen Fall, bei dem kein aktives Gespräch in den Zellen 1 und 2 aufgebaut ist.

Nach der Initialisierung des Telekommunikationssystems wird in beiden Zellen jeweils ein Dummy Bearer DB1, DB2 gesendet. Wie Figur 7a zeigt, wird der DB1 im Zeitschlitz 1 über die Antenne 4 gesendet und der DB2 im Zeitschlitz 4 über die Antenne 5.

Über die Zeitschlitze 7 bis 12 können die Mobilstationen entweder über die Antenne 4 oder die Antenne 5 Daten an die Basisstation senden. Nach Figur 7a ergibt sich folgende Kanalverteilung nach der Initialisierung des Systems:
Zelle 1: 3/1/2 Zelle 2: 3/1/2 Gesamt: 6/2/4

Dabei bedeutet 3/1/2, daß drei Zeitschlitze insgesamt zur Verfügung stehen, ein Zeitschlitz verwendet wird und zwei Zeitschlitze frei sind.

Die Figur 7b zeigt einen zweiten Fall, bei dem über Antenne 4 ein aktives Gespräch geführt wird.

Nach Umwandlung und Abschalten des DB1 in TB1 wird dieser im Zeitschlitz 1 über die Antenne 4 gesendet. Eigentlich müßte TB1 im Zeitschlitz 2 oder 3 gesendet werden, da er bereits aufgebaut wird, wenn DB1 noch vorhanden ist. Da es aber im Prinzip egal ist, in welchem Zeitschlitz gesendet wird, wird der Einfachheit halber im Zeitschlitz 1 gesendet. Dies gilt auch für alle folgenden Beispiele.

Der DB2 wird weiterhin im Zeitschlitz 4 über die Antenne 5 gesendet, während uplink-seitig über die Antenne 4 TB1' empfangen wird, der den Gegenkanal zu TB1 darstellt.

Der in Figur 7b gezeigte Fall tritt zum Beispiel ein, wenn eine Mobilstation mit einer Amtsleitung verbunden ist.

Nach Figur 7b ergibt sich folgende Kanalverteilung:

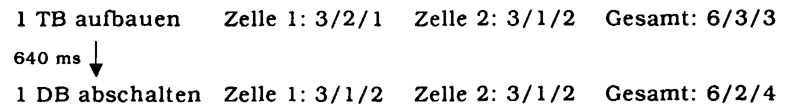

Die Figur 7c zeigt einen dritten Fall, bei dem zwei aktive Gespräche in zwei Zellen (Antenne 4 und Antenne 5) aufgebaut sind.

Ein derartiger Fall tritt zum Beispiel auf, wenn jeweils eine Mobilstation in jeder Zelle mit einer Amtsleitung verbunden wird, oder wenn zwei Mobilstationen, die in verschiedenen Zellen sind, miteinander verbunden werden (zwei Linecalls oder ein Intercomcall).

Die in Figur 7c gezeigte Zuordnung der Zeitschlitze ergibt sich, nachdem der DB1 und der DB2 jeweils in einen TB2 umgewandelt worden ist. Wie in der Figur gezeigt, wird TB1 im Zeitschlitz 1 über die Antenne 4 gesendet, während TB2 im Zeitschlitz 4 über die Antenne 5 gesendet wird. Uplinkseitig empfängt die Antenne 4 im Zeitschlitz 7 TB1', wobei die Antenne 5 im Zeitschlitz 10 den TB2' empfängt.

Nach Figur 7c ergibt sich folgende Kanalverteilung:

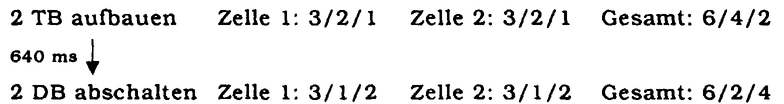

Die Figur 7d zeigt einen vierten Fall, bei dem zwei aktive Gespräche in einer Zelle (Antenne 4) aufgebaut sind.

Ausgehend von Fall 3, bei dem zum Beispiel ein Intercomcall zwischen zwei Mobilstationen besteht, von denen sich eine in Zelle 2 (Garten) und eine in Zelle 1 (Haus) befindet, könnte ein derartiger Fall eintreten, wenn zum Beispiel eine Mobilstation vom Garten ins Haus bewegt wird. Folglich müssen in der Zelle 1 zwei TB (TB1, TB2) und in der Zelle 2 ein DB2 aufgebaut werden. Da der Zelle 1 lediglich drei Zeitschlitze zugeordnet sind, wären somit durch die Traffic Bearer TB1, TB2 bereits zwei Zeitschlitze belegt, wodurch zum Beispiel innerhalb der Zelle 1 kein Intercomcall mehr möglich wäre. Aus diesem Grund borgt sich die Zelle 1 einen Zeitschlitz von Zelle 2, in der zur Zeit keine aktive Verbindung aufgebaut ist. Verwaltet wird das Ausborgen der Zeitschlitze von der MCU 12.

Folglich sind in Figur 7d die Zeitschlitze 1 bis 4 (7 bis 10) der Zelle 1 zugeordnet, wobei TB1 im Zeitschlitz 1 über die Antenne 4, TB2 über die Antenne 4 im Zeitschlitz 2 und DB2 über die Antenne 5 im Zeitschlitz 5 gesendet werden. Korrespondierend wird im Zeitschlitz 1 über die Antenne 4 TB1' und im Zeitschlitz 8 über die Antenne 4 TB2' empfangen.

Falls die zwei Traffic Bearer TB1, TB2 der Reihe nach innerhalb von 640 Millisekunden in einer Zelle 1 aufgebaut werden, ergibt sich folgende Kanalzuordnung:

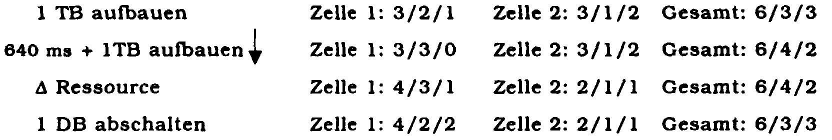

Falls der zweite Traffic Bearer erst nach 640 Millisekunden aufgebaut wird, ergibt sich folgende Kanalzuordnung:

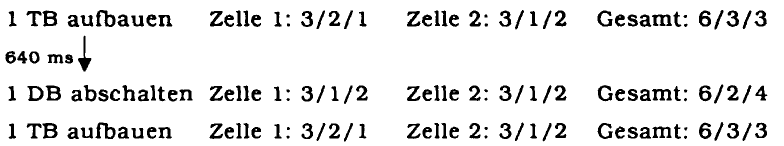

Die Figur 7e zeigt einen fünften Fall, bei dem in zwei Zellen (Antenne 4 und Antenne 5) drei aktive Gespräche aufgebaut sind. In Figur 7e sind im Gegensatz zu Figur 7d wieder die ersten drei Zeitschlitze der Zelle 1 zugewiesen. Bei drei aktiven Gesprächen in zwei Zellen sind insgesamt drei Traffic Bearer TB1, TB2, TB3 aufgebaut. Wie in Figur 7e zu sehen, wird der TB1 über die Antenne 4 im Zeitschlitz 1, der TB2 über die Antenne 4 im Zeitschlitz 2 und der TB3 über die Antenne 5 im Zeitschlitz 3 gesendet. Korrespondierung dazu wird im Zeitschlitz 7 über die Antenne 4 der TB1', im Zeitschlitz 8 über die Antenne 4 der TB2' und im Zeitschlitz 10 über die Antenne 5 der TB3' empfangen. Ein derartiger Fall, bei dem drei aktive Gespräche in zwei Zellen aufgebaut sind, könnte zum Beispiel bei einem Intercomcall (Garten-Haus) und einem Linecall (Haus-Amtsleitung) entstehen. Bei dem parallelen Aufbau von zwei Traffic Bearern in zwei Zellen und dem Aufbau eines dritten Traffic Bearer innerhalb von 640 Millisekunden ergibt sich folgende Kanalzuordnung:

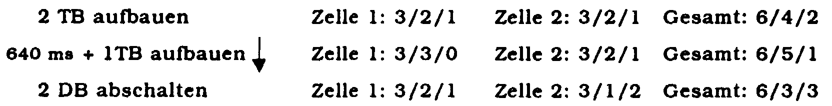

Das oben beschriebene Ausführungsbeispiel der Erfindung bezieht sich zwar in erster Linie auf ein DECT-Telekommunikationssystem, jedoch ist das zellulare Telekommunikationssystem gemäß der Erfindung auch auf andere Telekommunikationsstandards anwendbar.

## Patentansprüche

1. Zellulares Telekommunikationssystem mit n-Zellen (1, 2), von denen jeweils einer eine Antenne (4, 5) zugeordnet ist, über die eine Basisstation (3) senden und empfangen kann, **dadurch gekennzeichnet**, daß allen n-Zellen nur eine gemeinsame Basisstation mit n umschaltbaren Antennen zugeordnet ist, wobei n ≥ 2 ist.

2. Telekommunikationssystem nach Anspruch 1, **dadurch gekennzeichnet**, daß es zwei Zellen (1, 2) aufweist.

3. Telekommunikationssystem nach Anspruch 1 oder 2, **dadurch gekennzeichnet**, daß die Zuordnung der Zellen (1, 2) zu der gemeinsamen Basisstation (3) über einen in der Basisstation (3) enthaltenen Schalter (10) erfolgt, über den die jeweiligen Antennen (4,5) mit einer in der Basisstation (3) enthaltenen RF (Funkfrequenz)-Einheit (11) verbunden werden.

4. Telekommunikationssystem nach Anspruch 3, **dadurch gekennzeichnet**, daß der Schalter (10) von einer in der Basisstation (3) enthaltenen Mikrosteuereinheit (MCU) (12) gesteuert wird.

5. Telekommunikationssystem nach Anspruch 4, **dadurch gekennzeichnet**, daß von der MCU (12) gelieferte Information darüber, in welchem Zeitschlitz und mit welcher Frequenz die RF-Einheit (11) Daten zu übertragen hat, in einem BMC (Burst Mode Controller) (14) zwischengespeichert wird, bevor sie an die RF-Einheit (11) weitergeleitet wird.

6. Telekommunikationssystem nach Anspruch 4 oder 5, **dadurch gekennzeichnet**, daß die MCU (12) mit Speicherbausteinen (16) gekoppelt ist.

7. Telekommunikationssystem nach einem der Ansprüche 2 bis 6, **dadurch gekennzeichnet**, daß die in der Basisstation (3) enthaltenen Bestandteile über einen gemeinsamen Taktgeber (17) synchronisiert sind.

8. Telekommunikationssystem nach einem der Ansprüche 2 bis 7, **dadurch gekennzeichnet**, daß eine erste Antenne (4) in einem Gebäude (9) und eine zweite Antenne (5) außerhalb des Gebäudes (9) angeordnet sind.

9. Telekommunikationssystem nach einem der vorangegangenen Ansprüche, bei dem ein auf einem ersten Kanal gesendeter Bearer Information über die Position eines zweiten Kanals enthält, damit sich die Mobilstationen der jeweiligen Zelle unter Verwendung dieser Information auf den zweiten Kanal einstellen können.

10. Telekommunikationssystem nach Anspruch 9, **dadurch gekennzeichnet**, daß die Positionsinformation auf dem ersten Kanal parallel zu einem auf dem zweiten Kanal aufgebauten Traffic Bearer (TB) gesendet wird.

11. Telekommunikationssystem nach Anspruch 9 oder 10, **dadurch gekennzeichnet**, daß die Positionsinformation über einen Dummy Bearer (DB) gesendet wird.

12. Telekommunikationssystem nach Anspruch 11, **dadurch gekennzeichnet**, daß der Dummy Bearer (DB) nach Ablauf einer vorbestimmten Zeit abgeschaltet wird.

13. Telekommunikationssystem nach Anspruch 12, **dadurch gekennzeichnet**, daß die vorbestimmte Zeit 640 ms beträgt.

14. Telekommunikationssystem nach Anspruch 12 oder 13, **dadurch gekennzeichnet**, daß auf dem ersten Kanal nur der Dummy Bearer (DB) gesendet wird.

15. Telekommunikationssystem nach Anspruch 12 oder 13, **dadurch gekennzeichnet**, daß auf dem ersten Kanal ein Traffic Bearer (TB) gesendet wird, der nach Aufbau des Traffic Bearers (TB) auf dem zweiten Kanal in den Dummy Bearer (DB) überführt wird.

16. Telekommunikationssystem nach einem der Ansprüche 10 bis 15, **dadurch gekennzeichnet**, daß mit dem Abschalten des letzten Traffic Bearers (TB) dieser in einen permanenten Dummy Bearer (DB) umgewandelt wird.

17. Telekommunikationssystem nach einem der Ansprüche 9 bis 16, **dadurch gekennzeichnet**, daß Kanäle von Zellen jeweils anderen Zellen zugeordnet werden.
